(19) Europäisches Patentamt

European Patent Office

Office européen des brevets

(11) **EP 4 530 574 B1**

(12) **EUROPEAN PATENT SPECIFICATION**

(45) Date of publication and mention
of the grant of the patent:
**13.05.2026 Bulletin 2026/20**

(51) International Patent Classification (IPC):
**G01C 21/16** *(2006.01)* **G01C 25/00** *(2006.01)*
**G01S 7/497** *(2006.01)*

(21) Application number: **23199959.0**

(52) Cooperative Patent Classification (CPC):
**G01C 21/1652; G01C 21/1656; G01C 25/005;
G01S 7/497**

(22) Date of filing: **27.09.2023**

(54) **METHOD AND DEVICE FOR DETERMINING A LATENCY BETWEEN IMU DATA AND SENSOR DATA OF A SURROUNDING OF A VEHICLE**

VERFAHREN UND VORRICHTUNG ZUR BESTIMMUNG DER LATENZ ZWISCHEN IMU-DATEN UND SENSORDATEN EINER FAHRZEUGUMGEBUNG

MÉTHODE ET DISPOSITIF POUR DÉTERMINER LA LATENCE ENTRE LES DONNÉES IMU ET LES DONNÉES DES CAPTEURS DE L'ENVIRONNEMENT D'UN VÉHICULE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**02.04.2025 Bulletin 2025/14**

(73) Proprietor: **Robert Bosch GmbH**
**70442 Stuttgart (DE)**

(72) Inventors:
• **Marosi, Csaba**
**1117 Budapest (HU)**
• **Aranyosy, Adam**
**Budapest (HU)**

(56) References cited:
**CN-A- 112 129 317    US-B1- 11 187 793**

• **ELMAR MAIR ET AL: "Spatio-temporal initialization for IMU to camera registration", ROBOTICS AND BIOMIMETICS (ROBIO), 2011 IEEE INTERNATIONAL CONFERENCE ON, IEEE, 7 December 2011 (2011-12-07), pages 557 - 564, XP032165843, ISBN: 978-1-4577-2136-6, DOI: 10.1109/ROBIO.2011.6181345**

## Description

The present invention relates to a method and a device for determining a latency between a first time reference frame of a system under test in a host vehicle, and a second time reference frame of a reference system in the host vehicle.

Prior Art

Advanced driver-assistance systems (ADAS) provide functions which help drivers in driving and parking maneuvers. US 11,187,793 B1 relates to the calibration of sensor streams. CN 112129317 A relates to determining an information acquisition time difference. Mair et al., "Spatio-temporal initialization for IMU to camera registration", Robio 2011, pages 557-564 relates to inertia-visual sensors.

Perception is the subsystem in ADAS responsible for processing and condensing sensor data into a low-dimensional representation of the environment around the host vehicle. The tracked traffic participants can be selected as targets for a certain function such as automatic emergency braking or adaptive cruise control.

The system-level performance can be measured on the function-level. However, top-level performance reflects the superposition of the deficiencies of all lower-level system components, which makes the identification of root causes a lengthy process and decreases the modularity of subsystems. To remedy this problem, some form of perception-evaluation framework may be implemented.

Measuring tracking accuracy also requires some form of reference data, which can be provided by double automotive dynamic motion analyzer (ADMA) or differential GPS (dGPS) setups. A further approach relates to advanced reference systems such as lidar auto-labeler pipelines.

DE 10 2021 212 632 A1 relates to the testing of environment sensors and environment perception of vehicles, in particular for the purposes of driving assistance systems.

Disclosure of the Invention

The invention provides a method and a device for determining a latency between a first time reference frame of a system under test in a host vehicle, and a second time reference frame of a reference system in the host vehicle.

Preferred embodiments are set out in the dependent claims.

According to a first aspect, the invention provides a method according to claim 1.

According to a second aspect, the invention provides a device according to claim 8.

Advantages of the invention

In order to have a proper evaluation it is crucial to ensure that the states of reference data objects obtained by the reference system and the objects obtained by the system under test are compared at the same timestamps. In certain cases, no common time base exists between the reference system and the system under test, which introduces an additional error to the evaluation. This can be interpreted as a latency, which will offset the reference data states from the measured states.

The invention allows determining the latency und can therefore contribute to a more reliable perception evaluation. According to the invention, the latency is determined based on a first velocity obtained by the system under test and a second velocity obtained by the reference system. By comparing or matching these velocities, the latency can be determined.

According to the method, computing the latency between the first time reference frame and the second time reference frame comprises minimizing a difference between the first velocity in the first time reference frame and the second velocity in the second time reference frame shifted by the latency. If the correct latency is used, the difference becomes minimal because the velocity data from both systems basically coincides.

In an embodiment of the method, the difference between the first velocity and the second velocity is minimized using linear regression. This is a computationally efficient way to determine the latency.

According to the method, a time-dependent acceleration of the host vehicle in the second time reference frame is determined, using the reference system. The latency between the first time reference frame and the second time reference frame is further computed using the acceleration of the host vehicle. The acceleration can be used in the linear regression method.

In an embodiment of the method, the first velocity is determined using a first sampling rate. The second velocity is determined using a second sampling rate. The second velocity is resampled to the first sampling rate. By resampling, the first and second velocities can be compared.

In an embodiment of the method, the IMU measures a velocity, an acceleration and a position of the host vehicle. In an embodiment, a Kalman filter is used for measuring a velocity, an acceleration and a position of the host vehicle.

In an embodiment of the method, the IMU comprises three orthogonally positioned gyroscopes for measuring rotational motion and/or three accelerometers for measuring linear movements of the host vehicle.

In an embodiment of the method, a sensor drift of the reference system is compensated for by using a global navigation satellite system, GNSS. Based on the GNSS, the absolute position of the host vehicle can be determined.

In an embodiment of the method, the system under test comprises at least one of a radar sensor, LiDAR sensor, infrared sensor and camera sensor. Each of the sensors can acquire sensor data of the surrounding of the host vehicle.

In an embodiment of the method, first data obtained by the system under test and second data obtained by the reference system are brought into a common time reference frame, using the latency. The latency can therefore be used to match data obtained by the system under test and the reference system.

Further advantages, features and details of the invention will be apparent from the following description, in which various embodiments are described in detail with reference to the drawings.

Short description of the drawings

Figure 1    shows a schematic block diagram of a device for determining a latency;

Figure 2    shows a schematic illustration of a time-dependent first velocity of a host vehicle and a time-dependent second velocity of the host vehicle; and

Figure 3    shows a schematic flow chart of a method for determining a latency.

The numbering of process steps is for clarity and is generally not intended to imply any particular chronological order. In particular, several process steps can also be carried out simultaneously.

Description of the embodiments

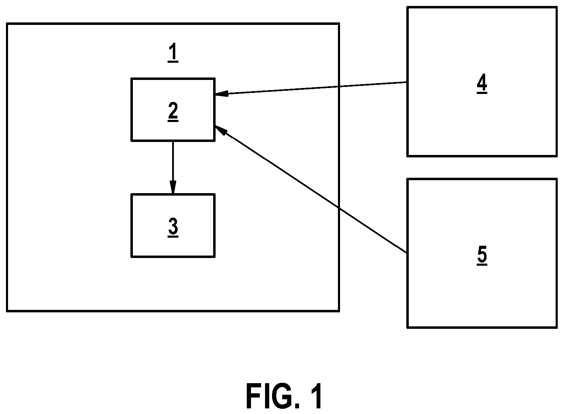

Figure 1 shows a schematic block diagram of a device 1 for determining a latency between a first time reference frame (i.e. temporal reference frame) of a system under test 4 in a host vehicle, and a second time reference frame of a reference system 5 in the host vehicle.

The system under test 4 comprises at least one sensor for acquiring sensor data of a surrounding of the host vehicle. The system under test 4 may comprise at least one of a radar sensor, LiDAR sensor, infrared sensor and camera sensor.

The reference system 5 comprises an inertial measurement unit, IMU. The IMU measures a velocity, an acceleration and a position of the host vehicle, e.g. using a Kalman filter. The IMU may comprise three orthogonally positioned gyroscopes for measuring rotational motion. The IMU may further comprise three accelerometers for measuring linear movements of the host vehicle.

The reference system 5 can comprise an automotive dynamic motion analyzer (ADMA).

The device 1 comprises an interface 2 configured to receive a time-dependent first velocity of the host vehicle in the first time reference frame, determined by the system under test 4. The interface 2 is further configured to receive a time-dependent second velocity of the host vehicle in the second time reference frame, determined by the reference system 5. The interface 2 may comprise any wired or wireless connection for receiving data, e.g. via a CAN bus.

The device 1 further comprises a computing unit 3. The computing unit 3 may comprise at least one of a microprocessor, integrated circuit, graphics processing unit, and the like. The computing unit 3 may further comprise at least one memory device for storing data and computing instructions.

The first velocity is determined using a first sampling rate. The second velocity is determined using a second sampling rate. The computing unit 3 may first resample the second velocity to the first sampling rate.

The computing unit 3 can further compute the latency between the first time reference frame and the second time reference frame, using the first velocity and the second velocity.

The computing unit 3 may compute the latency (i.e., relative temporal shift) between the first time reference frame and the second time reference frame by minimizing a difference between the first velocity $v_{HF}(t)_{TEST}$ of the host vehicle (HV) in the first time reference frame (obtained by the system under test 4) and the second velocity $v_{HF}(t)_{ADMA}$ in the second time reference frame shifted by the latency $\delta$.

**In** other words, the latency $\delta$ is sought to minimize the following expression (where the double brackets denote the L2 norm):

$$\|v_{HV}(t)_{TEST} - v_{HV}(t + \delta)_{ADMA}\|$$

One can expand $v_{HF}(t+\delta)_{ADMA}$ into a first-order Taylor-series around t:

$$\underline{v}_{HV}(t + \delta)_{ADMA} \approx v_{HV}(t)_{ADMA} + \frac{dv_{HV}(t)_{ADMA}}{dt} \cdot \delta$$

This equation has a simple physical meaning, that is the latency is causing a difference between the velocities, and this discrepancy is proportional to the acceleration.

$$a_{HV}(t)_{ADMA} = \frac{dv_{HV}(t)_{ADMA}}{dt}$$

The difference between the first velocity and the second velocity can be minimized using linear regression. The signals can be treated as temporal vectors to formulate the minimization problem as a linear regression task. The computing unit 3 may assume that there is no systematic error in the velocities, thus the first coefficient $\alpha$ in the following calculations may not be used as a free parameter because it is assumed to be close to unity:

$$\begin{pmatrix} v_{HV\,ADMA,1} & a_{HV\,ADMA,1} \\ & \cdots \\ & \cdots \\ v_{HV\,ADMA,N} & a_{HV\,ADMA,N} \end{pmatrix} \cdot (\alpha, \delta) = \begin{pmatrix} v_{HV\,TEST,1} \\ \cdots \\ \cdots \\ v_{HV\,TEST,N} \end{pmatrix}$$

Herein, $a_{HV\_ADMA}$ may relate a time-dependent acceleration of the host vehicle in the second time reference frame, i.e. determined by the reference system 5. The latency between the first time reference frame and the second time reference frame can be computed using the acceleration of the host vehicle.

The computing unit 3 may complete the linear regression task by computing the pseudoinverse via singular value decomposition and by multiplying both sides of the equation with the pseudoinverse. The goodness of the fit can be calculated, such as the R2 coefficient of the determination.

Whereas in figure 1, the system under test 4 and the reference system 5 are shown as external units, the device 1 may also comprise the system under test 4 and the reference system 5 in other embodiments.

The computing unit 3 may further be configured to compensate for a sensor drift of the reference system by using data from a global navigation satellite system, GNSS, e.g. obtained via interface 2.

The computing unit 3 may further bring first data obtained by the system under test 4 and second data obtained by the reference system 5 into a common time reference frame, using the latency. For example, the timestamps of the second data might be shifted by the latency.

The computing unit 3 may filter out all cycles in which the quality of the second velocity is not acceptable, for example indicated by a designated signal. Furthermore, the latency may be computed for scenarios with non-constant velocities, only.

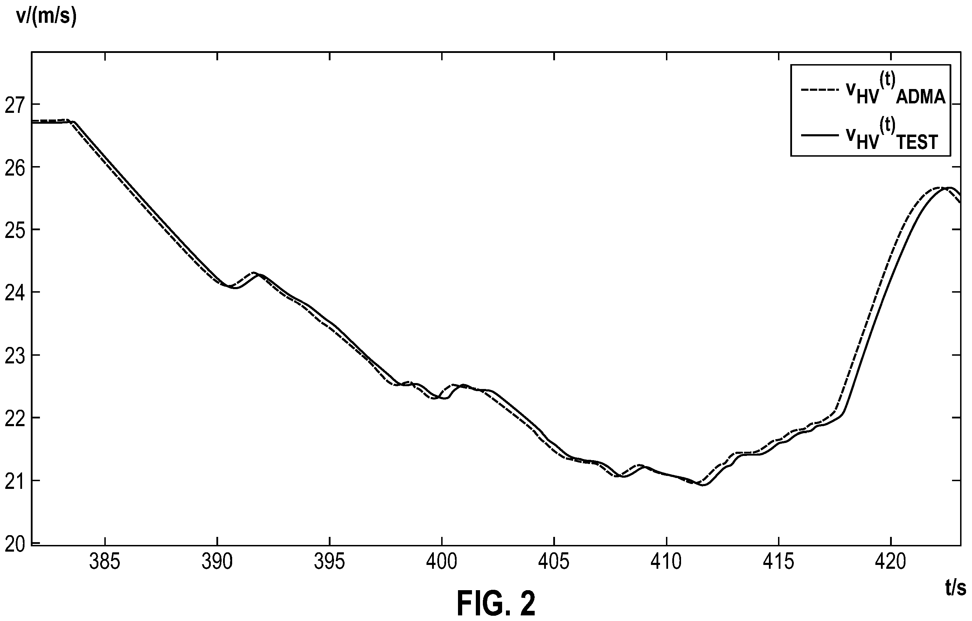

Figure 2 shows a schematic illustration of a time-dependent first velocity $v_{HV}(t)_{TEST}$ of a host vehicle and a time-dependent second velocity $v_{HV}(t)_{ADMA}$ of the host vehicle as a function of time t. As one can observe, there is an apparent shift between the two signals $v_{HF}(t)_{ADMA}$ and $(v_{HF}(t)_{TEST}$ even though they were recorded in the host vehicle, which corresponds to the latency (or relative temporal shift).

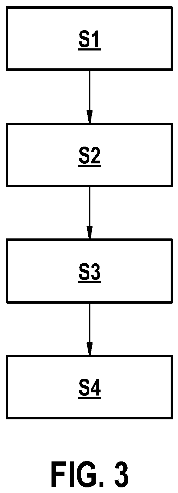

Figure 3 shows a schematic flow chart of a method for determining a latency between a first time reference frame of a system under test 4 in a host vehicle, and a second time reference frame of a reference system 5 in the host vehicle.

The system under test 4 comprises at least one sensor for acquiring sensor data of a surrounding of the host vehicle. The reference system 5 comprises an inertial measurement unit, IMU.

In step S1, a time-dependent first velocity of the host vehicle in the first time reference frame is determined, using the system under test 4.

In step S2, a time-dependent second velocity of the host vehicle in the second time reference frame is determined, using the reference system 5.

In step S3, the latency between the first time reference frame and the second time reference frame is computed, using the first velocity and the second velocity. The latency between the first time reference frame and the second time reference frame can be computed by minimizing a difference between the first velocity in the first time reference frame and the second velocity in the second time reference frame shifted by the latency.

In step S4, first data obtained by the system under test 4 and second data obtained by the reference system 5 can be brought into a common time reference frame, using the latency.

**Claims**

1. A method for determining a latency between a first time reference frame of a system under test (4) in a host vehicle, and a second time reference frame of a reference system (5) in the host vehicle, wherein the system under test (4) comprises at least one sensor for acquiring sensor data of a surrounding of the host vehicle, and wherein the reference system (5) comprises an inertial measurement unit, IMU, wherein the method comprises the steps:

   determining (S1) a time-dependent first velocity of the host vehicle in the first time reference frame, using the system under test (4);
   determining (S2) a time-dependent second velocity of the host vehicle in the second time reference frame, using the reference system (5);
   determining a time-dependent acceleration of the host vehicle in the second time reference frame, using the reference system (5); and
   computing (S3) the latency between the first time reference frame and the second time reference frame, using the first velocity, the second velocity and the acceleration of the host vehicle, which comprises minimizing a difference between the first velocity in the first time reference frame and the second velocity in the second time reference frame shifted by the latency.

2. The method according to claim 1, wherein the difference between the first velocity and the second velocity is minimized using linear regression.

3. The method according to claim 1 or 2, wherein the first velocity is determined using a first sampling rate;

   wherein the second velocity is determined using a second sampling rate; and
   wherein the second velocity is resampled to the first sampling rate.

4. The method according to any of the preceding claims, wherein the IMU comprises three orthogonally positioned gyroscopes for measuring rotational motion and/or three accelerometers for measuring linear movements of the host vehicle.

5. The method according to any of the preceding claims, wherein a sensor drift of the reference system (5) is compensated for by using data from a global navigation satellite system, GNSS.

6. The method according to any of the preceding claims, wherein the system under test (4) comprises at least one of a radar sensor, LiDAR sensor, infrared sensor and camera sensor.

7. The method according to any of the preceding claims, further comprising the step of bringing (S4) first data obtained by the system under test (4) and second data obtained by the reference system (5) into a common time reference frame, using the latency.

8. A device (1) for determining a latency between a first time reference frame of a system under test (4) in a host vehicle, and a second time reference frame of a reference system (5) in the host vehicle, wherein the system under test (4) comprises at least one sensor for acquiring sensor data of a surrounding of the host vehicle, and wherein the reference system (5) comprises an inertial measurement unit, IMU, wherein the device comprises:

   an interface (2) configured to receive a time-dependent first velocity of the host vehicle in the first time reference frame, determined by the system under test (4), configured to receive a time-dependent second velocity of the host vehicle in the second time reference frame, determined by the reference system (5), and configured to receive a time-dependent acceleration of the host vehicle in the second time reference frame, determined by the reference system (5); and
   a computing unit (3) configured to compute the latency between the first time reference frame and the second time reference frame, using the first velocity, the second velocity and the acceleration of the host vehicle, which comprises minimizing a difference between the first velocity in the first time reference frame and the second velocity in the second time reference frame shifted by the latency.

**EP 4 530 574 B1**

**Patentansprüche**

1. Verfahren zum Bestimmen einer Latenz zwischen einem ersten Zeitreferenzrahmen eines zu prüfenden Systems (4) in einem Host-Fahrzeug und einem zweiten Zeitreferenzrahmen eines Referenzsystems (5) in dem Host-Fahrzeug, wobei das zu prüfende System (4) mindestens einen Sensor zum Erfassen von Sensordaten einer Umgebung des Host-Fahrzeugs umfasst, und wobei das Referenzsystem (5) eine Inertialmesseinheit (IMU) umfasst, wobei das Verfahren die folgenden Schritte umfasst:

   Bestimmen (S1) einer zeitabhängigen ersten Geschwindigkeit des Fahrzeugs im ersten Zeitreferenzrahmen, wobei das zu prüfende System (4) verwendet wird;
   Bestimmen (S2) einer zeitabhängigen zweiten Geschwindigkeit des Fahrzeugs im zweiten Zeitreferenzrahmen, wobei das Referenzsystem (5) verwendet wird;
   Bestimmen einer zeitabhängigen Beschleunigung des Host-Fahrzeugs im zweiten Zeitreferenzrahmen unter Verwendung des Referenzsystems (5); und
   Berechnen (S3) der Latenz zwischen dem ersten Zeitreferenzrahmen und dem zweiten Zeitreferenzrahmen unter Verwendung der ersten Geschwindigkeit, der zweiten Geschwindigkeit und der Beschleunigung des Host-Fahrzeugs, was das Minimieren einer Differenz zwischen der ersten Geschwindigkeit in dem ersten Zeitreferenzrahmen und der zweiten Geschwindigkeit in dem zweiten Zeitreferenzrahmen, verschoben um die Latenz, umfasst.

2. Verfahren nach Anspruch 1, wobei die Differenz zwischen der ersten Geschwindigkeit und der zweiten Geschwindigkeit durch lineare Regression minimiert wird.

3. Verfahren nach Anspruch 1 oder 2, wobei die erste Geschwindigkeit unter Verwendung einer ersten Abtastrate bestimmt wird;

   wobei die zweite Geschwindigkeit unter Verwendung einer zweiten Abtastrate bestimmt wird; und
   wobei die zweite Geschwindigkeit mit der ersten Abtastrate neu abgetastet wird.

4. Verfahren nach einem der vorhergehenden Ansprüche, wobei die IMU drei orthogonal angeordnete Gyroskope zur Messung der Drehbewegung und/oder drei Beschleunigungsmesser zur Messung der linearen Bewegungen des Fahrzeugs umfasst.

5. Verfahren nach einem der vorhergehenden Ansprüche, wobei eine Sensordrift des Referenzsystems (5) durch Verwendung von Daten eines globalen Navigationssatellitensystems (GNSS) kompensiert wird.

6. Verfahren nach einem der vorhergehenden Ansprüche, wobei das zu prüfende System (4) mindestens einen Radarsensor, LiDAR-Sensor, Infrarotsensor und Kamerasensor umfasst.

7. Verfahren nach einem der vorhergehenden Ansprüche, das ferner den Schritt umfasst, erste Daten, die von dem zu prüfenden System (4) erhalten werden, und zweite Daten, die von dem Referenzsystem (5) erhalten werden, unter Verwendung der Latenzzeit in einen gemeinsamen Zeitreferenzrahmen zu bringen (S4).

8. Vorrichtung (1) zum Bestimmen einer Latenz zwischen einem ersten Zeitreferenzrahmen eines zu prüfenden Systems (4) in einem Host-Fahrzeug und einem zweiten Zeitreferenzrahmen eines Referenzsystems (5) in dem Host-Fahrzeug, wobei das zu prüfende System (4) mindestens einen Sensor zum Erfassen von Sensordaten einer Umgebung des Host-Fahrzeugs umfasst, und wobei das Referenzsystem (5) eine Inertialmesseinheit (IMU) umfasst, wobei die Vorrichtung Folgendes umfasst:

   eine Schnittstelle (2), die ausgebildet ist, um eine zeitabhängige erste Geschwindigkeit des Host-Fahrzeugs in dem ersten Zeitreferenzrahmen zu empfangen, die von dem zu prüfenden System (4) bestimmt wird, die ausgebildet ist, um eine zeitabhängige zweite Geschwindigkeit des Host-Fahrzeugs in dem zweiten Zeitreferenzrahmen zu empfangen, die von dem Referenzsystem (5) bestimmt wird, und die ausgebildet ist, um eine zeitabhängige Beschleunigung des Host-Fahrzeugs in dem zweiten Zeitreferenzrahmen zu empfangen, die von dem Referenzsystem (5) bestimmt wird; und
   eine Recheneinheit (3), die ausgebildet ist, um die Latenz zwischen dem ersten Zeitreferenzrahmen und dem zweiten Zeitreferenzrahmen unter Verwendung der ersten Geschwindigkeit, der zweiten Geschwindigkeit und der Beschleunigung des Host-Fahrzeugs zu berechnen, was das Minimieren einer Differenz zwischen der ersten Geschwindigkeit in dem ersten Zeitreferenzrahmen und der zweiten Geschwindigkeit in dem zweiten Zeitreferenzrahmen, verschoben um die Latenz, umfasst.

## Revendications

1. Procédé pour déterminer une latence entre un premier cadre de référence temporel d'un système à l'essai (4) dans un véhicule hôte, et un second cadre de référence temporel d'un système de référence (5) dans le véhicule hôte, dans lequel le système à l'essai (4) comprend au moins un capteur destiné à acquérir des données de capteur d'un environnement du véhicule hôte, et dans lequel le système de référence (5) comprend une unité de mesure inertielle, *Inertial Measurement Unit* IMU, dans lequel le procédé comprend les étapes :

   la détermination (S1) d'une première vitesse à dépendance temporelle du véhicule hôte dans le premier cadre de référence temporel, en utilisant le système à l'essai (4) ;
   la détermination (S2) d'une seconde vitesse à dépendance temporelle du véhicule hôte dans le second cadre de référence temporel, en utilisant le système de référence (5) ;
   la détermination d'une accélération à dépendance temporelle du véhicule hôte dans le second cadre de référence temporel, en utilisant le système de référence (5) ; et
   le calcul (S3) de la latence entre le premier cadre de référence temporel et le second cadre de référence temporel, en utilisant la première vitesse, la seconde vitesse, et l'accélération du véhicule hôte, qui comprend la minimisation d'une différence entre la première vitesse dans le premier cadre de référence temporel et la seconde vitesse dans le second cadre de référence temporel décalée par la latence.

2. Procédé selon la revendication 1, dans lequel la différence entre la première vitesse et la seconde vitesse est minimisée en utilisant une régression linéaire.

3. Procédé selon la revendication 1 ou 2, dans lequel la première vitesse est déterminée en utilisant une première fréquence d'échantillonnage ;

   dans lequel la seconde vitesse est déterminée en utilisant une seconde fréquence d'échantillonnage ; et
   dans lequel la seconde vitesse est rééchantillonnée à la première fréquence d'échantillonnage.

4. Procédé selon de quelconques des revendications précédentes, dans lequel l'IMU comprend trois gyroscopes positionnés orthogonalement destinés à mesurer un mouvement de rotation et/ou trois accéléromètres destinés à mesurer des mouvements linéaires du véhicule hôte.

5. Procédé selon de quelconques des revendications précédentes, dans lequel une dérive de capteur du système de référence (5) est compensée en utilisant des données provenant d'un système mondial de navigation par satellites, *Global Navigation Satellite System* GNSS.

6. Procédé selon de quelconques des revendications précédentes, dans lequel le système à l'essai (4) comprend au moins un capteur parmi un capteur radar, un capteur LiDAR, un capteur infrarouge, et un capteur à caméra.

7. Procédé selon de quelconques des revendications précédentes, comprenant en outre l'étape de la mise (S4) des premières données obtenues par le système à l'essai (4) et des second données obtenues par le système de référence (5) dans un cadre de référence temporel commun, en utilisant la latence.

8. Dispositif (1) pour déterminer une latence entre un premier cadre de référence temporel d'un système à l'essai (4) dans un véhicule hôte, et un second cadre de référence temporel d'un système de référence (5) dans le véhicule hôte, dans lequel le système à l'essai (4) comprend au moins un capteur destiné à acquérir des données de capteur d'un environnement du véhicule hôte, et dans lequel le système de référence (5) comprend une unité de mesure inertielle, *Inertial Measurement Unit* IMU, dans lequel le dispositif comprend :

   une interface (2) configurée pour recevoir une première vitesse à dépendance temporelle du véhicule hôte dans le premier cadre de référence temporel, déterminée par le système à l'essai (4), configurée pour recevoir une seconde vitesse à dépendance temporelle du véhicule hôte dans le second cadre de référence temporel, déterminée par le système de référence (5), et
   configurée pour recevoir une accélération à dépendance temporelle du véhicule hôte dans le second cadre de

**EP 4 530 574 B1**

référence temporel, déterminée par le système de référence (5) ; et
une unité de calcul (3) configurée pour calculer la latence entre le premier cadre de référence temporel et le second cadre de référence temporel, en utilisant la première vitesse, la seconde vitesse, et l'accélération du véhicule hôte, qui comprend la minimisation d'une différence entre la première vitesse dans le premier cadre de référence temporel et la seconde vitesse dans le second cadre de référence temporel décalée par la latence.

FIG. 1

**FIG. 2**

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 11187793 B1
- CN 112129317 A

- DE 102021212632 A1

**Non-patent literature cited in the description**

- **MAIR et al.** Spatio-temporal initialization for IMU to camera registration. *Robio*, 2011, 557-564